# EUROPEAN PATENT APPLICATION

(11) **EP 2 469 874 A2**
(43) Date of publication of application: **27.06.2012**
(21) Application number: 11189351.7
(22) Date of filing: 16.11.2011
(51) Int. Cl.: H04N 13/04

(54) **Displays for easy visualizing of 3D disparity data**

(30) Priority: 29.06.2011 US 172631; 23.12.2010 US 426949 P
(71) Applicant: Tektronix, Inc., Beaverton, Oregon 97077-0001 (US)
(72) Inventor: Gopishankar, Lakshmanan, Portland, OR Oregon 97229 (US)
(74) Representative: Schurack, Eduard F.

(57) **Abstract**

Embodiments of the present invention provide various displays for easy visualization of disparity data. Some embodiments provide a "snapshot" display having a plurality of markers, each marker representing a disparity statistic of a horizontal or vertical segment of a 3D image under test. Other embodiments provide a "trend" display having a plurality of markers, each marker representing a disparity statistic, or a rate of change of a disparity statistic, calculated over a single frame or field of a 3D video under test on a frame-by-frame basis. The disparity statistic may be maximum disparity, minimum disparity, mean disparity, RMS disparity, or the like.

## Description

### CROSS-REFERENCE TO RELATED APPLICATIONS

This application claims the benefit of U.S. Provisional Patent Application No. 61/426,949 titled "METHOD FOR EASY VISUALIZING OF 3D DISPARITY DATA" filed on December 23, 2010.

### FIELD OF THE INVENTION

The present invention relates to video test and measurement instruments, and more particularly to disparity measurements for three-dimensional (3D) images.

### BACKGROUND OF THE INVENTION

The past few years have seen an explosive growth of interest in 3D video—both live and recorded program material. 3D content producers have to deal with a variety of new consumer issues including eye strain, headaches, and so on. Many of these issues can be detected during content creation or at post-production sites by measuring disparity values on a frame-by-frame basis. The disparity value indicates the horizontal (or vertical) translation value between the left and right image frames at each pixel location. Using a disparity value, a technician or engineer can determine the actual "depths" at various locations within a frame.

Disparity information can be displayed in various ways. For example, the Cel-Scope3D stereoscopic analyser available from Cel-Soft.com Ltd of Cambridge, United Kingdom (described at http://www.cel-soft.com/celscope3d) displays disparity information for both horizontal and vertical directions in a "depth map" format. For a given frame, the Cel-Scope3D computes the disparities at various locations in the frame and then creates a color-coded distribution function (i.e., a histogram) of those disparities. In addition, the Cel-Scope3D provides an alarm for alerting a user whenever a measured disparity value in the distribution violates a pre-defined range. The color code in the distribution function maps back to a pseudo color coded edge map in such a way that the color of any edge point would be the same as the color of the depth value at that point when mapped into the histogram.

While the Cel-Scope3D's "depth map" is a helpful display, video technicians and engineers need additional displays in order to visualize disparity information.

### SUMMARY OF THE INVENTION

Embodiments of the present invention provide various displays for easy visualization of disparity data. Some embodiments provide a "snapshot" display having a plurality of markers, each marker representing a disparity statistic of a horizontal or vertical segment of a 3D image under test. Other embodiments provide a "trend" display having a plurality of markers, each marker representing a disparity statistic, or a rate of change of a disparity statistic, calculated over a single frame or field of a 3D video under test on a frame-by-frame basis. The disparity statistic may be maximum disparity, minimum disparity, mean disparity, RMS disparity, or the like.

The objects, advantages, and other novel features of the present invention are apparent from the following detailed description when read in conjunction with the appended claims and attached drawings.

### BRIEF DESCRIPTION OF THE DRAWINGS

FIG. 1 depicts a 3D video frame.

FIG. 2 depicts a horizontally segmented video frame according to an embodiment of the present invention.

FIG. 3 depicts a segmented frame disparity display according to an embodiment of the present invention.

FIG. 4 depicts a vertically segmented video frame according to an embodiment of the present invention.

FIG. 5 depicts a display of disparity trend data according to an embodiment of the present invention.

FIG. 6 depicts a display of disparity rate of change according to an embodiment of the present invention.

### DETAILED DESCRIPTION OF THE INVENTION

Embodiments of the present invention provide various new displays for visualizing disparity information.

**I. Segmented frame depth "snapshot" display**

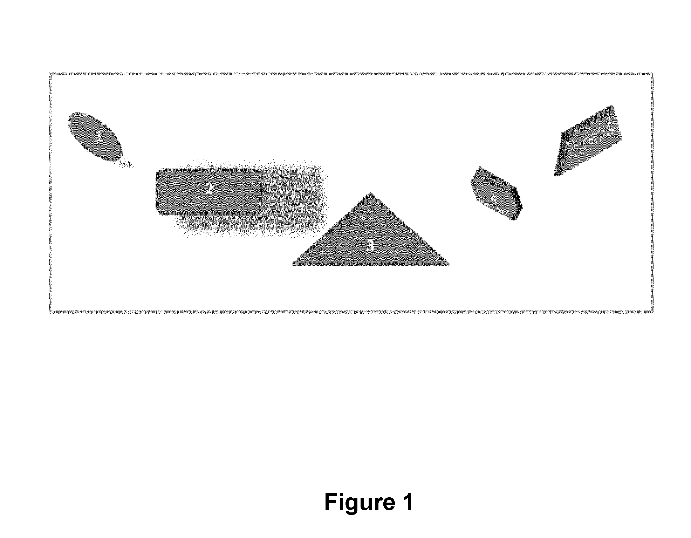

By way of example, consider FIG. 1, which depicts a video frame 100 that shows five objects 1, 2, 3, 4, and 5, each object having a different visual depth. Objects 1 and 2 have negative disparity and thus appears to be in front of the screen plane to a viewer. Objects 4 and 5 have positive disparity and thus appear to be behind the screen plane to a viewer. Object 3 has zero disparity and thus appears to be on the screen plane to a viewer.

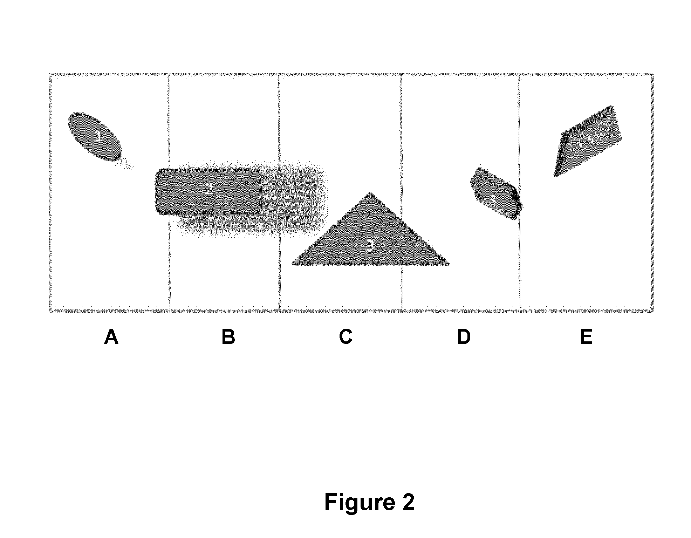

FIG. 2 depicts the same video frame as that shown in FIG. 1, except that it is now divided into five segments A, B, C, D, and E. In some embodiments of the present invention, disparity values are calculated for each of the five segments, a disparity statistic is calculated for each of the five segments based on the disparity values, and the disparity statistics are displayed on a graph. The disparity values may be calculated using any one of various methods such as the method described in co-pending U.S. Patent Application No. 13/004,124 titled "System and Methods to Efficiently Measure Stereoscopic Disparity and to Generate Related Mismatch Images" filed on January 11, 2011. The disparity statistics may be maximum disparity, minimum disparity, mean disparity, RMS disparity, and the like.

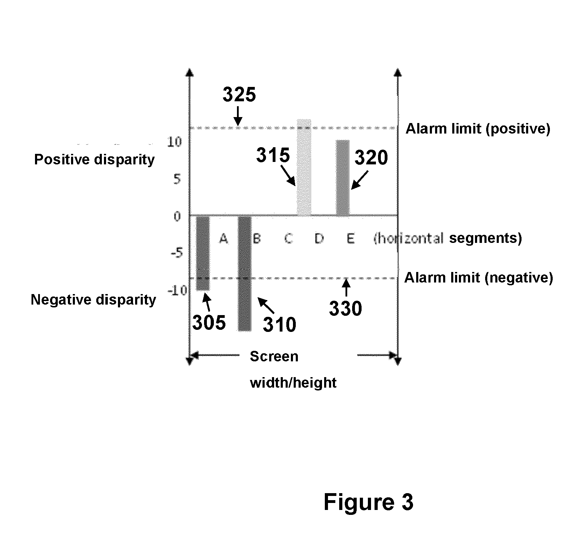

For example, as shown in FIG. 3, the maximum positive and negative disparity values 305, 310, 315, and 320 for each of the segments A, B, C, D, and E are displayed in bar graph form. Note that the maximum positive and negative disparity values 305, 310, 315, and 320 correspond to the objects 1, 2, 3, 4, and 5 shown in FIG. 2. Thus, the display 300 provides a technician or engineer with a "snapshot" of the maximum positive and negative disparities in each vertical segment of the video frame, or in other words, a "segmented horizontal view" of the disparities.

The "snapshot" display 300 allows a technician or engineer to immediately ascertain the positive and negative disparity values of a frame. This is particularly useful for a technician analyzing video data at a post-production facility because it helps to visualize a depth map without having to analyze complex depth data such as a histogram.

In some embodiments, an alarm limit 325 is displayed for positive disparities. In other embodiments, an alarm limit 330 is displayed for negative disparities. If either of these alarm limits is violated, the user is alerted.

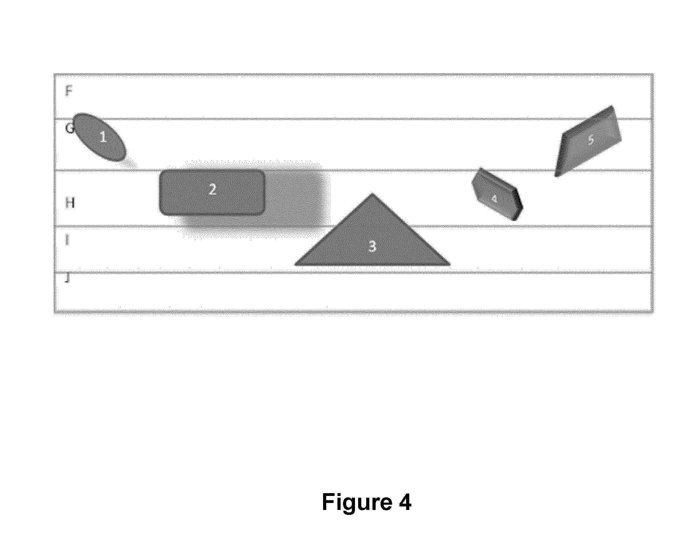

FIG. 4 depicts the same video frame as that shown in FIG. 1, except that it is now divided vertically into five segments F, G, H, I and J. In some embodiments, the disparities of each of these segments may be displayed in a manner similar to that of in FIG. 3, thereby providing a "segmented vertical view" of the disparities (not shown).

Although the video frames described above are all divided into five segments, it will be appreciated that a video frame may alternatively be divided into any number of segments. Accordingly, in some embodiments, the number of the segments, or alternatively, the width or height of the segments, is user-definable.

In some embodiments, the displayed disparity statistics may be depicted using different shades of gray-scale or color-coding based on the value of their corresponding disparity statistic. For example, negative disparity statistics may be depicted using various shades of red, with the more negative disparity statistics being depicted using a more saturated red, and positive disparities may be displayed using various shades of cyan.

In some embodiments (not shown), the disparity statistics are displayed together with their corresponding disparity values in order to provide more insight into the disparity statistics. For example, a bar representing the maximum disparity for a particular segment may be depicted as overlaying the disparity values upon which the disparity statistic is based.

Since these "snapshot" displays depict disparity information on a frame-by-frame basis, in some embodiments the displays include user-definable ballistics such as peak detect, fast attack, slow decay, and the like.

**II. "Trend" display**

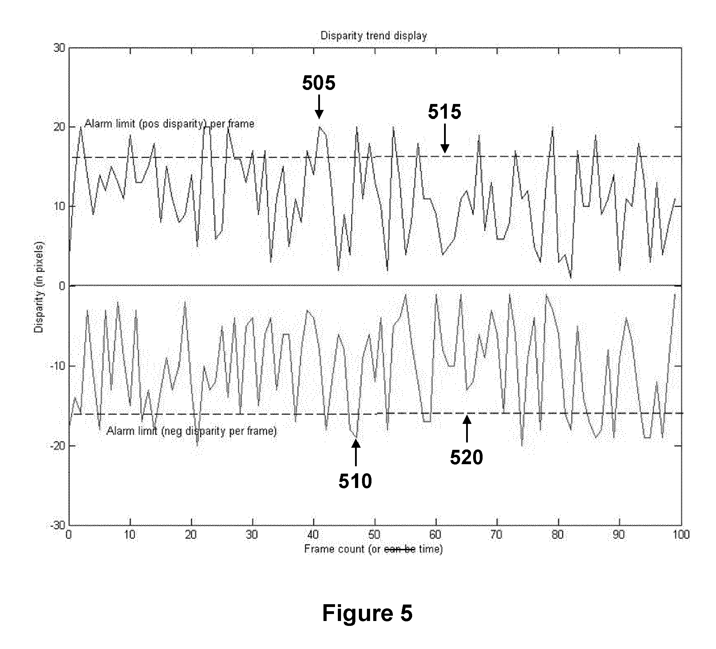

In some embodiments, a disparity statistic is calculated over a single frame or field on a frame-by-frame basis and then the resulting value is depicted by a marker in a trend graph. The disparity statistic may be maximum disparity, minimum disparity, mean disparity, RMS disparity, or the like. For example, FIG. 5 depicts a trend graph 500 of maximum positive disparities 505 and maximum negative disparities 510, with each marker corresponding to a single frame. In other embodiments (not shown), each marker represents a value that is calculated based on the disparity statistics of two or more frames or fields. For example, each marker on a trend graph may represent the moving average of the disparity statistics of the ten most recent frames or fields, or the like. Alternatively, instead of a moving average, various other calculations may be used such as filtering and the like.

In some embodiments, a positive disparity alarm limit 515 and a negative disparity alarm limit 520 are also displayed. If either of these alarm limits is violated, the user is alerted.

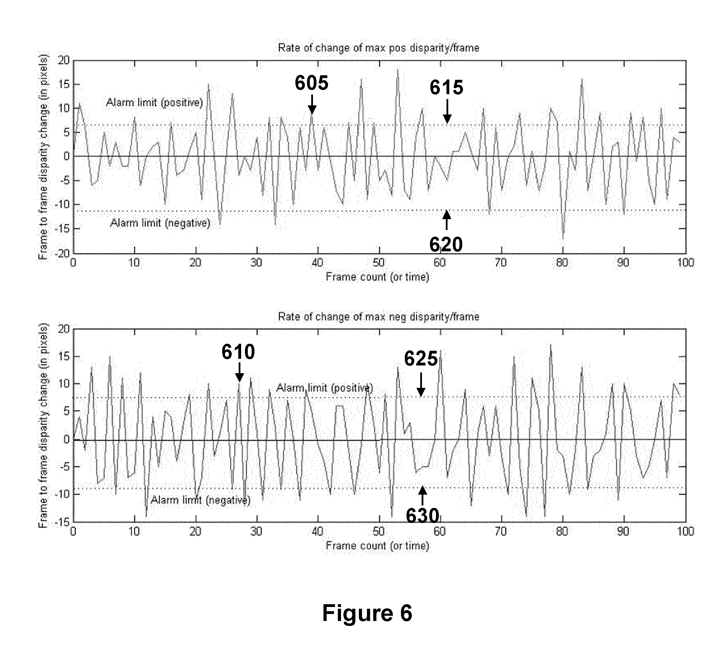

In other embodiments, the rate of the change of the above-mentioned values is displayed. For example, FIG. 6 depicts a display 600 of the rate of change of the maximum positive disparities 605 and the maximum negative disparities 610 shown in FIG. 5. The data shown in FIG. 6 is the first order derivative of the data shown in FIG. 5.

In some embodiments, a positive alarm limit 615 and a negative alarm limit 620 are shown for the rate of change of the maximum positive disparities. In other embodiments, a positive alarm limit 625 and a negative alarm limit 630 are shown for the rate of change of the maximum negative disparities. If any of these alarm limits is violated, the user is alerted.

These trend data displays are useful for understanding depth trends over time, both the disparity trend from frame-to-frame and the rate of change of disparity. This data, together with alarm settings, allows a user to view disparity information for an extended period of time, which is particularly useful for continuous video program material. An understanding of how depth information changes from frame-to-frame is particularly useful for analyzing scene-cuts with 3D data.

It will be appreciated that the various displays described herein are useful for presenting disparity information for images of any size, from small cell-phone displays to large cinema screens.

It will be appreciated that the displays described herein may be used in any disparity measurement application, and they are particularly useful in software applications such as the VQS 1000 Video Quality Analysis Software available from Tektronix, Inc. of Beaverton, Oregon. The VQS 1000 Video Quality Analysis Software is a useful tool for quality of experience (QoE) monitoring, network performance optimization, and remote in-service diagnostics of broadcast delivery issues.

While disparity statistics are depicted as bars in FIG. 3, and depicted as points in FIG. 5, it will be appreciated that those depictions are merely meant to be illustrative, and that disparity statistics may also be depicted using any other kind of marker.

It will be appreciated from the foregoing discussion that the present invention represents a significant advance in the field of video test and measurement instruments. Although specific embodiments of the invention have been illustrated and described for purposes of illustration, it will be understood that various modifications may be made without departing from the spirit and scope of the invention. Accordingly, the invention should not be limited except as by the appended claims.

## Claims

1. A display of a test and measurement instrument comprising a plurality of markers, each marker representing a calculated disparity statistic of a segment of a three-dimensional image under test.

2. The display of claim 1 wherein the disparity statistic is selected from the group consisting of maximum disparity, minimum disparity, mean disparity, and RMS disparity.

3. The display of claim 1 wherein the segments are horizontal segments.

4. The display of claim 1 wherein the segments are vertical segments.

5. The display of claim 1 further comprising an alarm limit.

6. The display of claim 1 wherein each marker is depicted in a shade of gray-scale or color-coding based on the value of the corresponding disparity statistic.

7. The display of claim 1 wherein the plurality of markers is displayed together with a plurality of corresponding disparity values.

8. A display of a test and measurement instrument comprising a plurality of markers, each marker being based on one or more disparity statistics, each disparity statistic being calculated over a single frame or field of a three-dimensional video under test on a frame-by-frame basis.

9. The display of claim 8 wherein the disparity statistic is selected from the group consisting of maximum disparity, minimum disparity, mean disparity, and RMS disparity.

10. The display of claim 8 further comprising a positive alarm limit.

11. The display of claim 8 further comprising a negative alarm limit.

12. A display of a test and measurement instrument comprising a plurality of markers, each marker representing a rate of change of a value based on one or more disparity statistics, each disparity statistic being calculated over a single frame or field of a three-dimensional video under test calculated on a frame-by-frame basis.

13. The display of claim 12 wherein the disparity statistic is selected from the group consisting of maximum disparity, minimum disparity, mean disparity, and RMS disparity.

14. The display of claim 12 further comprising an alarm limit.
